# FASCICULE DE BREVET EUROPEEN

(11) **EP 1 280 305 B1**
(45) Date de publication et mention de la délivrance du brevet: **20.06.2007**
(21) Numéro de dépôt: 02291820.5
(22) Date de dépôt: 18.07.2002
(51) Int. Cl.: H04L 12/56

(54) **Procédé de sélection de chemins de transmission et réseau de communication mettant en oeuvre ce procédé**
Verfahren zur Übertragungswegeauswahl und Kommunikationssnetz dafür
Transmission path selection method and communication network therefore

(30) Priorité: 26.07.2001 FR 0110001
(43) Date de publication de la demande: 29.01.2003
(73) Titulaire: Alcatel Lucent, 75008 Paris (FR)
(72) Inventeur: Fabre, Benoît, 31000 Toulouse (FR); Canela, Zoely, 91620 La Ville du Bois (FR); Randriamasy, Claire-Sabine, 92190 Meudon (FR)
(74) Mandataire: Chaffraix, Sylvain

(56) Documents cités:
- BORELLA A ET AL: "IMPROVING THE COST/PERFORMANCE RATIO IN MULTICAST COMMUNICATIONS" PROCEEDINGS OF THE EUROPEAN CONFERENCE ON NETWORKS AND OPTICAL COMMUNICATIONS 2000. NOC 2000. BROADBAND ACCESS, WDM METRO AND NETWORK MANAGEMENT, PROCEEDINGS OF THE EUROPEAN CONFERENCE ON NETWORKS AND OPTICAL COMMUNICATIONS. NOC, AMSTERDAM: IOS PRESS, vol. PRT 2 OF 2, 2000, pages 187-190, XP000993864 ISBN: 1-58603-068-X
- CASETTI C ET AL: "AN ADAPTIVE ROUTING ALGORITHM FOR BEST-EFFORT TRAFFIC IN INTEGRATED-SERVICES NETWORKS" PROCEEDINGS OF THE INTERNATIONAL TELETRAFFIC CONGRESS. ITC-16. TELETRAFFIC ENGINEERING IN A COMPETITIVE WORLD. EDINBURGH, UK, JUNE 7 - 11, 1999, TELETRAFFIC SCIENCE AND ENGINEERING, AMSTERDAM: ELSEVIER, NL, vol. 3B, 7 juin 1999 (1999-06-07), pages 1281-1290, XP000878159 ISBN: 0-444-50268-8

## Description

La présente invention concerne le domaine de la transmission de données par paquets dans un réseau, notamment l'optimisation de telles transmissions du point de vue du routage dans un réseau basé sur un protocole Internet, et a pour objets un procédé de sélection d'au moins un chemin de transmission et un réseau de communication mettant en oeuvre ce procédé.

Actuellement, dans le domaine précité, la sélection du chemin ou trajet de transmission (également dénommée route ou voie de transmission) est généralement réalisée en tenant compte d'un unique critère d'évaluation, qui n'est pas forcément le meilleur puisque souvent plusieurs critères, liés à différentes caractéristiques ou propriétés recherchées, sont ou pourraient être concernées dans le cadre de ladite sélection.

Une telle sélection est en particulier non optimale lorsqu'au moins deux critères antagonistes peuvent être impliqués dans le choix du chemin de transmission à définir et qu'un seul seulement est retenu pour opérer ladite sélection.

Le protocole de routage ou de sélection de chemins de transmission le plus fréquemment utilisé est celui dénommé OSPF ("Open Shortest Path First" - Priorité au chemin le plus court qui est dégagé), utilisant un algorithme dit algorithme de Dijkstra particulièrement adapté aux réseaux à protocole Internet, ou un éventuel dérivé de cet algorithme.

Ces algorithmes connus ne peuvent prendre en compte qu'un seul critère d'évaluation à chaque procédure de sélection, ce critère étant de nature sommable, c'est-à-dire que le poids représentant l'évaluation de chaque chemin analysé correspond à la somme des poids élémentaires aux arcs du chemin concerné.

Or, il existe actuellement un besoin pour un routage dans les réseaux à protocole Internet sur la base de plusieurs critères de sélection ou de routage simultanés, et dans certains cas antagonistes, tels que, par exemple, le délai de transmission, la distance, le coût, la stabilité et l'équilibrage de charge dans le réseau utilisé.

Il existe bien entendu des méthodes de sélection ou de décision à critères multiples qui seraient susceptibles d'exécuter des opérations de sélection multicritères pour choisir un chemin de transmission optimal, éventuellement sous forme de meilleur compromis, en regard de plusieurs critères différents.

Toutefois, le traitement de tous les chemins possibles par ces méthodes à critères multiples nécessiterait des opérations de traitement complexes en quantités très importantes, demandant des puissances de calcul adaptées en conséquence et entrainant des délais et des coûts disproportionnés et rédhibitoires dans le domaine concerné.

Le document XP-000993864 (Borella et al.) décrit un algorithme de routage multipoint CDSAMA qui fournit un arbre de multidiffusion connectant toutes les destinations à une source donnée. CDSAMA sélectionne un arbre de coût minimum à l'aide de l'algorithme Dijkstra en prenant en compte le coût des liens. Dans une variante CDSAMA2, l'algorithme Dijkstra prend en compte la latence des liens au lieu de leur coût, pour donner précédence aux contrainte de latence.

Le document XP-000878159 (Casetti et al.) propose une revue des algorithmes de routage, en particulier ceux employant à la fois des caractéristiques de topologie et de trafic. L'algorithme AW-S sélectionne le chemin présentant la plus grande bande passant disponible entre plusieurs chemins ayant le même nombre de saut. L'algorithme S-AW sélectionne le chemin présentant le plus petit nombre de saut entre plusieurs chemins ayant la même bande passante disponible.

La présente invention a notamment pour but de surmonter les inconvénients et les limitations mentionnés ci-dessus.

A cet effet, elle a pour objet un procédé de détermination ou de sélection d'au moins un chemin ou trajet pour la transmission de données par paquets, dans un réseau de communication mettant en oeuvre un protocole de transmission du type protocole Internet, procédé caractérisé en ce qu'il consiste essentiellement à prédéterminer un nombre limité de chemins en appliquant, à plusieurs reprises, une méthode de sélection à critère unique à l'ensemble des chemins possibles dans le réseau considéré, en utilisant différents premiers critères, puis à déterminer un ou plusieurs chemin(s) donné(s) parmi ledit nombre limité de chemins prédéterminés en comparant ces derniers entre eux sur la base d'au moins deux critères conditionnels puis en les classant.

L'idée à la base de la présente invention repose sur la réalisation de deux phases opératoires de sélection successives, à savoir, une première série d'opérations de sélection sur la base de plusieurs critères appliqués séparément de manière unitaire et une seconde opération de sélection dont une étape applique plusieurs critères conditionnels simultanément et utilise les résultats de ladite première série d'opérations de sélection.

En vue de réduire au mieux la durée totale des traitements à réaliser, l'étape ou la phase de présélection ou de prédétermination consiste avantageusement à appliquer la méthode de sélection à critère unique, dans des procédures de traitement se déroulant en parallèle, simultanément auxdits chemins possibles, avec des premiers critères différents, chaque procédure de traitement proposant un ou plusieurs chemin(s) optimal(aux) en regard du premier critère concerné respectif.

Toutefois, notamment lorsque le délai total de traitement n'est pas un facteur capital et/ou lorsqu'une puissance de calcul adéquate est disponible, les traitements de l'étape de prédétermination peuvent également être effectués de manière consécutive ou sérielle, en appliquant de manière répétée ladite méthode de sélection à critère unique aux différents chemins possibles existants (compte tenu du point de départ et du point d'arrivée), à chaque fois avec un critère d'évaluation différent.

Conformément à un mode de réalisation préféré de l'invention, la méthode de sélection à critère unique consiste en un logiciel basé sur l'algorithme de Dijkstra ou sur une variante de ce dernier.

Avantageusement, les premiers critères peuvent, par exemple, être choisis dans le groupe formé par la distance de transmission la plus courte, la seconde distance de transmission la plus courte, le délai de transmission le plus court, le second délai de transmission le plus court, le coût de transmission le plus faible, le second coût de transmission le plus faible, la bande passante disponible la plus importante et la seconde bande passante disponible la plus importante.

Bien entendu, d'autres critères d'évaluation peuvent également être appliqués tels que, par exemple, disponibilité, nature du ou des support(s) de transmission ou fiabilité et sécurité de transmission, en relation avec les possibilités de chemins ou de trajets offerts par le réseau pour la liaison envisagée.

Les critères conditionnels mentionnés précédemment consistent préférentiellement en une variable conditionnelle sur un test de type (premier critère k sur chemin X > premier critère k sur chemin Y), et prenant, par exemple, la valeur 1 si le test est vérifié et -1 sinon.

Selon une caractéristique avantageuse de l'invention, l'étape de détermination finale d'au moins un chemin donné consiste à comparer les chemins prédéterminés entre eux deux à deux sur la base de plusieurs critères conditionnels pondérés, combinés entre eux, formant ainsi un critère de classement, puis à établir un classement desdits chemins prédéterminés en fonction des résultats desdites opérations de comparaisons mutuelles et, enfin, à sélectionner un ou plusieurs chemin(s) en fonction de leur rang dans ledit classement.

Ces critères de classement peuvent concerner en particulier des caractéristiques, des paramètres et/ou des spécificités techniques de transmission et être déterminés par l'opérateur de réseau en fonction du ou des type(s) de services requis pour la transmission envisagée ou la communication concernée, ainsi qu'éventuellement de la qualité de service à fournir, en fonction des requêtes de l'utilisateur ou de la nature de la communication concernée.

Ces critères de classement pourront, par exemple, être constitués par certains desdits premiers critères et/ou par des critères conditionnels simples, associés sous forme de combinaison et affectés chacun d'un poids particulier en fonction de son importance dans le mode de la transmission envisagée.

Selon une première variante de réalisation de l'invention, la comparaison mutuelle des chemins prédéterminés entre eux, et éventuellement leur classement consécutif, est (sont) réalisé(s) au moyen d'un algorithme à critères multiples.

Avantageusement, cet algorithme de sélection à critères multiples est basé sur la méthode dite ELECTRE, préférentiellement celle dite ELECTRE II (Bernard Roy, LAMSADE, Paris IX Dauphine).

Selon une seconde variante de réalisation de l'invention, la détermination finale est réalisée par l'intermédiaire d'un algorithme de sélection à critères multiples basé sur des opérations de comparaison linéaires élémentaires entre les différents chemins prédéterminés, aboutissant à des classements deux par deux, chaque comparaison élémentaire produisant un critère de classement Wxy qui équivaut à la somme algébrique de critères conditionnels pondérés correspondant chacun à une variable conditionnelle sur un premier critère.

Pour pouvoir disposer de plusieurs possibilités de chemins de transmission, par exemple un ou plusieurs chemin(s) pour chaque type de communication ou de transmission concerné(e), le procédé selon l'invention peut éventuellement consister à réaliser plusieurs opérations successives de détermination finale sur la base de différents groupes ou de différents arrangements combinatoires de critères conditionnels pondérés différents, et à définir plusieurs chemins ou plusieurs groupes de chemins préférés, chaque chemin ou groupe de chemins préférés étant attribué à un type de service et/ou à une qualité de service donné.

La présente invention a également pour objet un procédé de transmission de données par paquets dans un réseau de communication adapté à la mise en oeuvre d'un protocole de transmission du type protocole Internet, caractérisé en ce qu'il consiste, avant chaque établissement d'une communication ou avant chaque séquence de transmission durant une communication en cours, à déterminer un chemin ou un trajet de transmission au moyen du procédé tel que décrit ci-dessus.

Enfin, ladite invention concerne également un réseau de communication selon la revendication 13.

Préférentiellement, ladite unité de traitement présente une architecture autorisant des traitements parallèles simultanés, conformément à la revendication 14.

Dans ce qui suit, la présente invention est décrite plus précisément, mais non limitativement, sous la forme d'un exemple de réalisation pratique.

Comme indiqué précédemment, la sélection d'au moins un(e) chemin de transmission ou route optimal(e), préférentiellement d'un nombre p de chemins optimaux, est opérée en réalisant dans un premier temps plusieurs sélections primaires simultanées en exécutant en parallèle plusieurs algorithmes de routage ou de sélection de chemins à critère unique, ces algorithmes présentant la même structure et traitant un problème identique (sélection des meilleurs chemins entre un premier point ou routeur A et un second point ou routeur Z faisant partie du réseau de communication concerné ou étant connecté à ce dernier), tout en appliquant des critères d'évaluation ou de sélection différents.

Après cette phase de sélection primaire fournissant n chemins optimaux sur la base des critères utilisés, les meilleurs chemins sont sélectionnés parmi ces n chemins résultants, en accord avec des critères de routage liés à la qualité de service et en mettant en oeuvre une méthode de sélection multicritères (selection de p chemins parmi lesdits n).

Le procédé de sélection selon l'invention peut, par exemple, se présenter sous la forme d'un algorithme composite à deux phases de traitement distinctes, telles que décrites ci-dessous.

Cet algorithme comporte deux étapes principales, la seconde étape comportant elle-même trois sous-étapes.

Sa structure se présente comme suit :
1. prédétermination d'un nombre limité n de chemins
2. sélection finale d'un sous-ensemble de p ≤ n chemins optimaux
   2.1. comparaison deux à deux des chemins
   2.2. classement des chemins en fonction de la comparaison mutuelle
   2.3. sélection des p premiers dans le classement.

Dans la première phase, des traitements simultanés sont réalisés sur la base de l'algorithme de Dijkstra (ou d'une variante de ce dernier) pour obtenir un ensemble limité de n (par exemple n = 5) chemins a priori intéressants (le chemin le plus court, le second chemin le plus court, le chemin au délai le plus court, le second chemin au délai le plus court, le chemin le moins cher).

Cette phase de traitements préliminaires évite, lors de la phase de traitement consécutive multicritères, d'avoir à traiter un trop grand nombre de chemins possibles.

Ladite seconde phase de traitement consiste alors à sélectionner et à classer les p meilleurs chemins parmi lesdits n chemins présélectionnés, en relation avec une combinaison de plusieurs critères conditionnels formant des critères de classement.

Les critères choisis pour cette seconde phase peuvent par exemple être au nombre de trois et être constitués par le délai de transmission, la bande passante minimale libre existant sur canaux de transmission, la bande passante moyenne libre existant sur les canaux de transmission. A ce sujet, il convient de noter que les critères liés à la bande passante ne sont pas sommables, mais leurs valeurs peuvent toutefois être figées en début d'algorithme.

L'opérateur du réseau définit un poids W_{i,ToS} pour chaque critère i, en fonction du type de service (ToS : Type of Service), par exemple courrier électronique, visioconférence ou analogue.

Les n chemins sont ensuite comparés les uns aux autres sur la base de cette combinaison de critères, pour déterminer lesquels surclassent les autres.

Par exemple, le chemin X surclasse le chemin Y lorsque W_{XY} > 0 (ou lorsque W_{XY} > à un quelconque seuil positif S) avec :
W_{XY} = w1 x (1 si (délai sur le chemin X < délai sur le chemin Y) sinon - 1) + w2 x (1 si (bande passante minimale libre pour le chemin X > bande passante minimale libre pour le chemin Y) sinon - 1)
+ w3 x (1 si (bande passante moyenne libre pour le chemin X > bande passante moyenne libre pour le chemin Y) sinon - 1).

Dans cet exemple, w2 et w3 pondèrent le critère d'équilibrage de charge du réseau.

Il convient de noter qu'une autre possibilité de formule de comparaison de surclassement est donnée par ELECTRE.

Ensuite, les n chemins sont classés en fonction de la comparaison effectuée à l'étape précédente. Ce classement peut par exemple être réalisé avec la méthode ELECTRE.

Ainsi, à titre d'exemple, le chemin X et le chemin W sont meilleurs que le chemin Y, lequel est meilleur que le chemin V et que le chemin U.

Il convient de noter que l'ordre résultant du classement précité peut ne pas être un ordre total, certains chemins pouvant avoir des classements identiques.

Pour aboutir, si nécessaire, à un ordre total, il est possible d'appliquer un ou plusieurs critères supplémentaires en plus des critères déjà utilisés ou de choisir un critère préférentiel parmi la combinaison de critères utilisés, ce critère préférentiel constituant alors le critère discriminatoire final (par exemple, chemin le plus court, adresse de protocole Internet plus faible, ...).

L'ultime étape du procédé de sélection consiste enfin à choisir les p meilleurs chemins obtenus pour chaque type de service, et de les programmer dans la table de transmission.

Il convient de noter en outre que le procédé selon l'invention permet à l'opérateur de réseau d'adapter ou de modifier le procédé de sélection précité, en amendant et/ou en paramétrant l'algorithme correspondant au moyen d'outils adaptés.

Ainsi, il pourra notamment définir librement le nombre n de chemins résultant de la présélection, les premiers critères utilisés par l'algorithme de Dijkstra dans chaque branche de traitement parallèle, les critères conditionnels et de classement utilisés dans la phase de sélection multicritères pour chaque type de service, le nombre et les poids desdits critères conditionnels et de classement, le seuil s dans la formule mise en oeuvre dans le procédé de classement, le nombre p de chemins retenus comme meilleurs chemins pour chaque type de service et le type de service à prendre en considération.

Par ailleurs, l'homme du métier notera également que le procédé de détermination ou de sélection décrit ci-dessus est totalement interfaçable avec les méthodes et les protocoles de routage actuellement utilisés, tels que notamment OSPF.

Il convient de noter, en outre, que pour compenser le temps d'exécution de l'algorithme, on peut le faire exécuter en "temps masqué", c'est-à-dire en tâche de fond, sur un processeur dédié, et l'interfacer avec un algorithme de partage de charge en temps réel de type connu sous la désignation OMP (Optimised Multi Path: chemin multiple optimisé). Le temps d'exécution serait moins problématique en ce que périodiquement l'OMP (ou autre) répartirait le trafic sur les p chemins en un temps de calcul plus rapide. Par exemple, si le temps de calcul de l'algorithme selon l'invention est de une minute et que le temps de calcul de l'OMP est cinq secondes, l'OMP sera exécuté douze fois en considérant les p(t) bons chemins à la date t, puis à nouveau douze fois sur les p(t+1) bons chemins à la date 1 + 1 minute, etc.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

## Revendications

1. Procédé de détermination ou de sélection d'au moins un chemin ou trajet pour la transmission de données par paquets, dans un réseau de communication mettant en oeuvre un protocole de transmission du type protocole Internet, **caractérisé en ce qu'**il consiste essentiellement à prédéterminer un nombre limité de chemins en appliquant, à plusieurs reprises, une méthode de sélection à critère unique à l'ensemble des chemins possibles dans le réseau considéré, en utilisant différents premiers critères, puis à déterminer un ou plusieurs chemin(s) donné(s) parmi ledit nombre limité de chemins prédéterminés en comparant ces derniers entre eux sur la base d'au moins deux critères conditionnels, puis en les classant.

2. Procédé selon la revendication 1, **caractérisé en ce que** l'étape de prédétermination consiste à appliquer la méthode de sélection à critère unique, dans des procédures de traitement se déroulant en parallèle, simultanément auxdits chemins possibles, avec des premiers critères différents, chaque procédure de traitement proposant un ou plusieurs chemin(s) optimal(aux) en regard du premier critère concerné respectif.

3. Procédé selon l'une quelconque des revendications 1 et 2, **caractérisé en ce que** la méthode de sélection à critère unique consiste en un logiciel basé sur l'algorithme de Dijkstra ou sur une variante de ce dernier.

4. Procédé selon l'une quelconque des revendications 1 à 3, **caractérisé en ce que** les premiers critères sont choisis dans le groupe formé par la distance de transmission la plus courte, la seconde distance de transmission la plus courte, le délai de transmission le plus court, le second délai de transmission le plus court, le coût de transmission le plus faible, le second coût de transmission le plus faible, la bande passante disponible la plus importante et la seconde bande passante disponible la plus importante.

5. Procédé selon l'une quelconque des revendications 1 à 4, **caractérisé en ce que** l'étape de détermination finale d'au moins un chemin donné consiste à comparer les chemins prédéterminés entre eux deux à deux sur la base de plusieurs critères conditionnels pondérés, combinés entre eux et formant un critère de classement, puis à établir un classement desdits chemins prédéterminés en fonction des résultats desdites opérations de comparaisons mutuelles et, enfin, à sélectionner un ou plusieurs chemin(s) en fonction de leur rang dans ledit classement.

6. Procédé selon la revendication 5, **caractérisé en ce que** les critères de classement concernent des caractéristiques, des paramètres et/ou des spécificités techniques de transmission et sont déterminés par l'opérateur de réseau en fonction du ou des type(s) de services requis pour la transmission envisagée ou la communication concernée, ainsi qu'éventuellement de la qualité de service à fournir.

7. Procédé selon l'une quelconque des revendications 1 à 6, **caractérisé en ce que** la comparaison mutuelle des chemins prédéterminés entre eux, et éventuellement leur classement consécutif, est (sont) réalisé(s) au moyen d'un algorithme à critères multiples.

8. Procédé selon la revendication 7, **caractérisé en ce que** l'algorithme de sélection à critères multiples est basé sur la méthode dite ELECTRE, préférentiellement celle dite ELECTRE II.

9. Procédé selon l'une quelconque des revendications 5 à 7, **caractérisé en ce que** la détermination finale est réalisée par l'intermédiaire d'un algorithme de sélection à critères multiples basé sur des opérations de comparaison linéaires élémentaires entre les différents chemins prédéterminés, aboutissant à des classements deux par deux, chaque comparaison élémentaire produisant un critère de classement Wxy qui équivaut à la somme algébrique de critères conditionnels pondérés correspondant chacun à une variable conditionnelle sur un premier critère.

10. Procédé selon l'une quelconque des revendications 5 à 9, **caractérisé en ce qu'**il consiste à réaliser plusieurs opérations successives de détermination finale sur la base de différents groupes ou de différents arrangements combinatoires de critères conditionnels pondérés différents, et à définir plusieurs chemins ou plusieurs groupes de chemins préférés, chaque chemin ou groupe de chemins préférés étant attribué à un type de service et/ou à une qualité de service donné.

11. Procédé selon l'une quelconque des revendications 1 à 10, **caractérisé en ce que** l'algorithme comprenant les étapes de prédétermination et de détermination est exécuté en tant que tâche de fond sur un processeur dédié et est interfacé avec un algorithme de partage de charge en temps réel.

12. Procédé de transmission de données par paquets dans un réseau de communication adapté à la mise en oeuvre d'un protocole de transmission du type protocole Internet, **caractérisé en ce qu'**il consiste, avant chaque établissement d'une communication ou avant chaque séquence de transmission, à déterminer un chemin ou un trajet de transmission au moyen du procédé selon l'une quelconque des revendications 1 à 11.

13. Réseau de communication adapté pour la transmission de données par paquets et comportant des modules de routage permettant l'utilisation d'un protocole de transmission de type protocole Internet, **caractérisé en ce qu'**il comporte au moins une unité de traitement apte à exécuter un procédé de détermination de chemin pour déterminer des chemins de transmission dans ledit réseau, ladite unité étant arrangée pour prédéterminer un nombre limité de chemins en appliquant, à plusieurs reprises, une méthode de sélection à critère unique à un ensemble de chemins possibles dans ledit réseau, en utilisant différents premiers critères, puis pour déterminer un ou plusieurs chemin(s) donné(s) parmi ledit nombre limité de chemins prédéterminés en comparant ces derniers entre eux sur la base d'au moins deux critères conditionnels, puis en les classant, ladite unité de traitement étant apte à configurer lesdits chemins de transmission déterminés.

14. Réseau selon la revendication 13, **caractérisé en ce que** ladite unité de traitement présente une architecture apte à exécuter une pluralité de traitements parallèles simultanés, chaque traitement comprenant une sélection à critère unique appliquée audit ensemble des chemins possibles, ladite pluralité de traitements parallèles simultanés utilisant une pluralité de critères différents.

## Claims

1. A method of determining or selecting a path for transmitting data in packets in an Internet Protocol communication network, which method is **characterized in that** it comprises predetermining a limited number of paths by repeatedly applying a single criterion selection method to all of the paths in the network concerned, using different first criteria, and then determining one or more given paths from said limited number of predetermined paths by comparing them with each other on the basis of two or more conditional criteria and then classifying them.

2. A method according to claim 1, **characterized in that** the predetermination step consist of applying the single criterion selection method simultaneously to all said paths in processing procedures executed in parallel and using different first criteria and each processing procedure proposes one or more optimum paths in the light of the respective first criterion concerned.

3. A method according to claim 1 or claim 2, **characterized in that** the single criterion selection method is implemented in software based on the Dijkstra algorithm or a variant thereof.

4. A method according to any one of claims 1 to 3, **characterized in that** the first criteria are chosen from the group comprising the shortest transmission distance, the second shortest transmission distance, the shortest transmission time, the second shortest transmission time, the lowest transmission cost, the second lowest transmission cost, the greatest bandwidth and the second greatest bandwidth.

5. A method according to any one of claims 1 to 4, **characterized in that** the step of final determination of a given path compares the predetermined paths two by two in the light of weighted conditional criteria combined with each other and forming a classification criterion, establishes a classification of said predetermined paths as a function of the results of said comparison operations, and finally selects one or more paths as a function of their rank in said classification.

6. A method according to claim 5, **characterized in that** the classification criteria concern transmission characteristics, parameters and/or specific technical features and are determined by the network operator as a function of the type or types of services required for the transmission envisaged or the call concerned and possibly as a function of the quality of service to be provided.

7. A method according to any one of claims 1 to 6, **characterized in that** a multiple criteria algorithm is used to compare the predetermined paths with each other and possibly for their subsequent classification.

8. A method according to claim 7, **characterized in that** the multiple criteria selection algorithm is based on the ELECTRE method and preferably the ELECTRE II method.

9. A method according to any one of claims 5 to 7, **characterized in that** a multiple criteria selection algorithm is used for the final determination based on linear individual comparisons of the predetermined paths, leading to two by two classifications, each individual comparison producing a classification criterion Wxy which is equivalent to the algebraic sum of weighted conditional criteria each corresponding to a variable conditional on a first criterion.

10. A method according to any one of claims 5 to 9, **characterized in that** it includes successive final determination operations based on different groups or different combinations of different weighted conditional criteria defining preferred paths or preferred groups of paths and each preferred path or preferred group of paths is allocated to one type of service and/or to a given quality of service.

11. A method according to any one of claims 1 to 10, **characterized in that** the algorithm comprising the predetermination and determination steps is executed as a background task on a dedicated processor and interfaced with a real time load sharing algorithm.

12. A method of transmitting data in packets in an Internet Protocol communication network, which method is **characterized in that** it determines a transmission path using the method according to any one of claims 1 to 11 before each call is set up or before each transmission sequence.

13. A communication network for transmitting data in packets and including routing modules enabling the use of a transmission protocol of the Internet Protocol type, which network is **characterized in that** it includes a processor that is suitable for executing a path-determination method so as to determine transmission paths in said network, said processor being arranged to predetermine a limited number of paths by applying, several times, a single criterion selection method to a set of possible paths in said network by using different first criteria, then to determine one or more given paths amongst said limited number of predetermined paths by comparing said paths with one another on the basis of at least two conditional criteria, then classifying them, said processor being suitable for configuring said determined transmission paths.

14. A network according to claim 13, **characterized in that** said processor has an architecture that is suitable for executing a plurality of simultaneous parallel processing procedures, each procedure applying a single criterion selection to said set of possible paths, said plurality of simultaneous parallel procedures using a plurality of different criteria.

## Patentansprüche

1. Verfahren zur Bestimmung oder zur Auswahl von mindestens einem Weg oder Pfad für die paketweise Datenübertragung in einem Kommunikationsnetz, welches ein Übertragungsprotokoll vom Typ des Internet-Protokolls einsetzt, **dadurch gekennzeichnet, dass** es im Wesentlichen darin besteht, eine begrenzte Anzahl von Wegen vorab zu bestimmen, indem wiederholte Male eine Auswahlmethode mit Einfachkriterium auf sämtliche möglichen Wege in dem betrachteten Netz angewendet wird, wobei unterschiedliche erste Kriterien verwendet werden, anschließend einen oder mehrere gegebene(n) Weg(e) unter der begrenzten Anzahl vorab bestimmter Wege zu bestimmen, indem diese letztgenannten untereinander auf der Basis von mindestens zwei Bedingungskriterien verglichen werden und indem sie anschließend klassifiziert werden.

2. Verfahren nach Anspruch 1, **dadurch gekennzeichnet, dass** die Etappe der Vorabbestimmung darin besteht, dass die Auswahlmethode mit Einfachkriterium in Verarbeitungsverfahren angewendet wird, die parallel und gleichzeitig für die möglichen Wege mit unterschiedlichen ersten Kriterien ablaufen, wobei jedes Verarbeitungsverfahren einen oder mehrere optimale(n) Weg(e) im Hinblick auf das jeweils betroffene erste Kriterium vorschlägt.

3. Verfahren nach einem der Ansprüche 1 und 2, **dadurch gekennzeichnet, dass** die Auswahlmethode mit Einfachkriterium aus einer auf dem Dijkstra-Algorithmus oder auf einer Variante von letzterem basierenden Software besteht.

4. Verfahren nach einem der Ansprüche 1 bis 3, **dadurch gekennzeichnet, dass** die ersten Kriterien aus einer Gruppe gewählt werden, die aus der kürzesten Übertragungsentfernung, der zweitkürzesten Übertragungsentfernung, der kürzesten Übertragungsdauer, der zweitkürzesten Übertragungsdauer, den geringsten Übertragungskosten, den zweigeringsten Übertragungskosten, der größten verfügbaren Bandbreite und der zweitgrößten verfügbaren Bandbreite besteht.

5. Verfahren nach einem der Ansprüche 1 bis 4, **dadurch gekennzeichnet, dass** die Etappe der endgültigen Bestimmung von mindestens einem gegebenen Weg darin besteht, die vorab bestimmten Wege untereinander jeweils paarweise auf der Basis von mehreren gewichteten Bedingungskriterien zu vergleichen, die untereinander kombiniert werden und so ein Klassifizierungskriterium bilden, und anschließend eine Klassifizierung dieser vorab bestimmten Wege in Abhängigkeit von den Ergebnissen der gegenseitigen Vergleichsoperationen zu erstellen und schließlich einen oder mehrere Weg(e) in Abhängigkeit von ihrem Rang in dieser Klassifizierung auszuwählen.

6. Verfahren nach Anspruch 5, **dadurch gekennzeichnet, dass** die Klassifizierungskriterien Merkmale, Parameter und/oder technische Besonderheiten der Übertragung betreffen und vom Netzbetreiber in Abhängigkeit von dem oder den Diensttyp(en) bestimmt werden, die für die in Betracht gezogene Übertragung oder die betroffene Kommunikation erforderlich sind, sowie eventuell [in Abhängigkeit] von der zu liefernden Dienstgüte.

7. Verfahren nach einem der Ansprüche 1 bis 6, **dadurch gekennzeichnet, dass** der gegenseitige Vergleich der vorab bestimmten Wege untereinander und eventuell ihre nachfolgende Klassifizierung mittels eines Algorithmus mit Mehrfachkriterien durchgeführt wird (werden).

8. Verfahren nach Anspruch 7, **dadurch gekennzeichnet, dass** der Auswahlalgorithmus mit Mehrfachkriterien auf der so genannten ELECTRE-Methode, vorzugsweise der als "ELECTRE II" bezeichneten, basiert.

9. Verfahren nach einem der Ansprüche 5 bis 7, **dadurch gekennzeichnet, dass** die endgültige Bestimmung mittels eines Auswahlalgorithmus mit Mehrfachkriterien erfolgt, der auf elementaren linearen Vergleichsoperationen zwischen den verschiedenen vorab bestimmten Wegen basiert, die zu paarweisen Klassifizierungen führen, wobei jeder Elementarvergleich ein Klassifizierungskriterium Wxy erzeugt, das gleich der algebraischen Summe der gewichteten Bedingungskriterien ist, die jeweils einer Bedingungsvariable bei einem ersten Kriterium entsprechen.

10. Verfahren nach einem der Ansprüche 5 bis 9, **dadurch gekennzeichnet, dass** es darin besteht, mehrere aufeinander folgende Operationen zur endgültigen Bestimmung auf der Basis unterschiedlicher Gruppen oder unterschiedlicher Kombinationsanordnungen von unterschiedlichen gewichteten Bedingungskriterien durchzuführen und mehrere bevorzugte Wege oder Gruppen von Wegen zu definieren, wobei jeder bevorzugte Weg oder jede bevorzugte Gruppe von Wegen einem gegebenen Diensttyp und/oder einer gegebenen Dienstgüte zugeordnet sind.

11. Verfahren nach einem der Ansprüche 1 bis 10, **dadurch gekennzeichnet, dass** der Algorithmus, welcher die Etappen der Vorabbestimmung und Bestimmung umfasst, als Hintergrund-Task auf einem dafür reservierten Prozessor ausgeführt wird und von ihm eine Schnittstelle zu einem Algorithmus für die Echtzeit-Auslastungsaufteilung hergestellt wird.

12. Verfahren zur paketweisen Datenübertragung in einem Kommunikationsnetz, das zur Anwendung eines Übertragungsprotokolls vom Typ des Internet-Protokolls geeignet ist, **dadurch gekennzeichnet, dass** es darin besteht, vor jeder Herstellung einer Verbindung oder vor jeder Übertragungssequenz während einer bestehenden Verbindung einen Übertragungsweg oder -pfad mittels des Verfahrens nach einem der Ansprüche 1 bis 11 zu bestimmen.

13. Kommunikationsnetz, geeignet zur paketweisen Datenübertragung und umfassend Routing-Module, die die Verwendung eines Übertragungsprotokolls vom Typ des Internet-Protokolls ermöglichen, **dadurch gekennzeichnet, dass** es mindestens eine Verarbeitungseinheit umfasst, die zur Ausführung eines Wegebestimmungsverfahrens geeignet ist, um Übertragungswege in dem Netz zu bestimmen, wobei die Einheit so angeordnet ist, dass sie eine begrenzte Anzahl von Wegen vorab bestimmt, indem wiederholte Male eine Auswahlmethode mit Einfachkriterium auf sämtliche möglichen Wege in dem Netz angewendet wird, wobei unterschiedliche erste Kriterien verwendet werden, dass sie anschließend einen oder mehrere gegebene(n) Weg(e) unter der begrenzten Anzahl vorab bestimmter Wege bestimmt, indem diese letztgenannten untereinander auf der Basis von mindestens zwei Bedingungskriterien verglichen werden, und dass sie sie anschließend klassifiziert, wobei die Verarbeitungseinheit geeignet ist, die bestimmten Übertragungswege zu konfigurieren.

14. Netz nach Anspruch 13, **dadurch gekennzeichnet, dass** die Verarbeitungseinheit eine Architektur aufweist, die dazu geeignet ist, eine Vielzahl gleichzeitiger paralleler Verarbeitungen auszuführen, wobei jede Verarbeitung eine Auswahl mit Einfachkriterium aus der Menge der möglichen Wege umfasst, wobei die Vielzahl paralleler gleichzeitiger Verarbeitungen eine Vielzahl unterschiedlicher Kriterien verwendet.
